# EUROPÄISCHE PATENTSCHRIFT

(11) **EP 2 019 614 B1**
(45) Veröffentlichungstag und Bekanntmachung des Hinweises auf die Patenterteilung: **21.07.2010**
(21) Anmeldenummer: 07720154.9
(22) Anmeldetag: 21.05.2007
(51) Int. Cl.: A47J 31/54

(54) **ERWÄRMUNGSVORRICHTUNG FÜR EINE GETRÄNKEBEREITUNGSMASCHINE**
HEATING DEVICE FOR A BEVERAGE-MAKING MACHINE
DISPOSITIF DE CHAUFFAGE POUR UNE MACHINE A PRÉPARER LES BOISSONS

(30) Priorität: 22.05.2006 CH 827062006
(43) Veröffentlichungstag der Anmeldung: 04.02.2009
(73) Patentinhaber: JURA ELEKTROAPPARATE AG, 4626 Niederbuchsiten (CH)
(72) Erfinder: REYHANLOO, Shahryar, CH-4573 Lohn Ammannsegg (CH)
(74) Vertreter: EGLI-EUROPEAN PATENT ATTORNEYS
(86) Internationale Anmeldenummer: PCT/CH2007/000257
(87) Internationale Veröffentlichungsnummer: WO 2007/134476

(56) Entgegenhaltungen:
- EP-A1- 0 676 163
- DE-A1- 3 521 989

## Beschreibung

Die Erfindung betrifft eine Erwärmungsvorrichtung für eine Getränkebereitungsmaschine nach Patentanspruch 1.

Die Erfindung betrifft insbesondere eine Erwärmungsvorrichtung für eine Getränkebereitungsmaschine mit einem Wassertank, mindestens einer Wasserpumpe zur Zuführung von Wasser zu einem ersten Durchlauferhitzer für die Erzeugung von Heisswasser und zu einem zweiten Durchlauferhitzer für die Erzeugung von Dampf.

Die Verwendung unabhängiger Durchlauferhitzer für die Bereitstellung von Heisswasser und Dampf ist in vielen der heute üblichen Getränkebereitungsmaschinen anzutreffen, weil sie die effiziente Erzeugung von Getränken mit gleichbleibender Qualität ermöglicht. Insbesondere wegen der thermischen Trägheit der einzelnen Heisswasser- oder Dampfbereitungskomponenten erweist es sich nämlich in der Regel als schwierig, sowohl Heisswasser als auch Dampf mit nur einem einzigen Durchlauferhitzer bzw. Heizelement herzustellen. Gleichwohl besteht aber ein Bedarf, konstruktiv einfache und zuverlässig arbeitende Getränkebereitungsvorrichtungen für nicht-industrielle Zwecke anbieten zu können, mit denen bei Bedarf auch grössere Mengen von Heisswasser oder Dampf in relativ kurzer Zeit bereitgestellt werden können.

Ein Beispiel einer Getränkebereitungsmaschine mit zwei Heizelementen ist die DE-42 04 746-C2. Sie zeigt eine Kaffeemaschine mit einem Heizblock mit zwei Durchlauferhitzern und einer Pumpe. Ein erster Durchlauferhitzer ist dabei mit einem Brühkopf für die Herstellung eines Kaffeeaufgusses verbunden, während ein zweiter Durchlauferhitzer mit einer Dampfdüse zur Erhitzung oder Aufschäumung von Milch verbunden ist. Bei dieser Vorrichtung ist nur jeweils derjenige Durchlauferhitzer aktiv, der mit Wasser gefüllt wird. Der andere Durchlauferhitzer wird zwar heiss, bleibt aber inaktiv. Hier besteht somit (in gängiger Weise) eine fixe Zuordnung des Durchlauferhitzers zur jeweiligen Funktion (Heisswasser- oder Dampferzeugung).

Die DE-39 12 788-A1 zeigt ebenfalls eine Kaffeemaschine, hier sogar mit drei Durchlauferhitzern und einer Pumpe, wobei den Durchlauferhitzern wiederum klare Funktionen zugeteilt sind, nämlich für die Erzeugung von Kaffee, Heisswasser oder Dampf.

Schliesslich zeigt die DE-35 21 989-A1 eine Vorrichtung zur Erzeugung von Wasserdampf in Verbindung mit einer Kaffee- oder Espressomaschine zum Erwärmen von Flüssigkeiten. Diese Vorrichtung hat eine Pumpe, eine erste Heizung und einen Kaffeebrühkopf, wobei vor dem Brühkopf ein Zweiwegventil eingefügt ist, das es gestattet, das von der ersten Heizung aufgeheizte Wasser wahlweise zu dem Brühkopf oder zu einer zweiten Heizung zu leiten. Die zweite Heizung dient dazu, dem bereits erhitzten Wasser die notwendige Verdampfungswärme zuzuführen, um es in Dampf überzuführen. Auch hier sind somit den beiden Heizungen klare Funktionen zugeteilt (für die Erzeugung von Heisswasser oder von Dampf), bei der Dampferzeugung besteht aber eine Abhängigkeit, weil hier die erste Heizung stets mitbeteiligt ist.

Die Aufgabe der Erfindung besteht darin, eine Erwärmungsvorrichtung für eine Getränkebereitungsmaschine anzugeben, bei der die vorhandenen Heizeinrichtungen (z.B. Durchlauferhitzer) möglichst effizient und vielseitig nutzbar sind.

Diese Aufgabe wird durch die Merkmale des Patentanspruchs 1 gelöst.

Die Lösung geht davon aus, dass zwei grundsätzlich autonom arbeitende Durchlauferhitzer in Zusammenhang mit einer entsprechend ausgebildeten Steuerungseinrichtung sowie der speziellen Anordnung der Bauelemente sowohl jeder autonom für sich als auch beide miteinander für das gleiche Produkt (Heisswasser oder Dampf) arbeiten können.

Insbesondere geht man davon aus, dass ein erster Durchlauferhitzer für die Erzeugung von Heisswasser und ein zweiter Durchlauferhitzer für die Erzeugung von Dampf vorhanden sind. Dabei ist der erste Durchlauferhitzer bei Bedarf auf Dampferzeugung umschaltbar und zum zweiten Durchlauferhitzer zuschaltbar, und/oder ein zweiter Durchlauferhitzer ist bei Bedarf auf Heisswassererzeugung umschaltbar und zum ersten Durchlauferhitzer zuschaltbar.

Somit kann durch die Parallelschaltung der Heizelemente entweder die Heisswasserleistung oder die Dampfleistung bei Bedarf erhöht werden. Die erfindungsgemässe Lösung ermöglicht deshalb auch, dass Getränkebereitungsmaschinen mit strukturell ähnlicher Bauart (d.h. mit zwei Durchlauferhitzern) auf einfache Art mit dieser erweiterten Funktionalität ausgestattet werden können.

Da, wie bereits erwähnt, die thermische Trägheit der verwendeten der einzelnen Heisswasser- oder Dampfbereitungskomponenten eine Rolle spielt, ist es von Bedeutung, dass der erste und/oder der zweite Durchlauferhitzer gleichzeitig oder zeitverzögert zum jeweilig anderen Durchlauferhitzer zuschaltbar sirid/ist. Die zeitverzögerte Zuschaltung kann beispielsweise erforderlich sein, wenn nach der Bereitung einer Getränkeportion mit Heisswasser die Bereitung einer grossen Getränkeportion mit Dampf verlangt wird, oder wenn nach der Bereitung einer grossen Getränkeportion mit Dampf die Bereitung einer grossen Getränkeportion mit Heisswasser verlangt wird. Im ersteren Fall braucht das zur Unterstützung eingesetzte Heizelement eine gewisse Aufwärmzeit, im letzteren Fall braucht das zur Unterstützung eingesetzte Heizelement eine gewisse Abkühlzeit. Es versteht sich, dass zur technischen Beherrschung solcher Verhältnisse auch eine geeignete Steuerungseinrichtung vorhanden sein muss. Die Steuerungseinrichtung wird zur Steuerung der Umschaltung der Durchlauferhitzer zur Erzeugung von Heisswasser oder Dampf sowie zur Steuerung der Zuschaltung der Durchlauferhitzer verwendet. Bei der Steuerung der Zuschaltung geht es um die Zuschaltung des ersten Durchlauferhitzers zum zweiten Durchlauferhitzer oder um die Zuschaltung des zweiten Durchlauferhitzers zum ersten Durchlauferhitzer, beides in Abhängigkeit von Eingaben an einer Bedieneinheit und des vorhergehenden Betriebszustandes der Getränkebereitungsmaschine bzw. der Erwärmungsvorrichtung. Weiterhin wird die technische Beherrschbarkeit durch die erfindungsgemässe Anordnung der Bauelemente der Erwärmungsvorrichtung verbessert.

Somit kann - sofern beide Heizelemente mit den vorgesehenen Umschaltmöglichkeiten versehen sind - erreicht werden, dass mit den Eingaben an der Bedieneinheit prinzipiell die Vorgänge "Dampfbezug normal", "Dampfbezug erhöht (power steam)", "Wasserbezug normal" und "Wasserbezug erhöht (power hot water)" wählbar sind. Die "erhöhten" Bezugsmöglichkeiten indizieren, dass die erfindungsgemässe Erwärmungsvorrichtung entweder erhöhte Heisswasserleistung oder erhöhte Dampfleistung erbringen kann. Gleichwohl könnte aber auch ins Auge gefasst werden, vereinfachte Varianten von Getränkebereitungsmaschinen vorzusehen, bei denen neben den normalen Bezugsmöglichkeiten lediglich "erhöhter Heisswasserbezug" oder lediglich "erhöhter Dampfbezug" wählbar sind.

In Bezug auf die spezielle Anordnung der Bauelemente der Erwärmungsvorrichtung kann Folgendes vorgesehen sein:
Es ist vorteilhaft, ein zweites Dampfauslassrohr vorzusehen. Dampfauslassrohre für Getränkebereitungsmaschinen haben üblicherweise einen bestimmten Rohrdurchmesser, der weder zu klein noch zu gross gewählt sein sollte. Ist er zu klein, so wird der Dampfaustrittsdruck zu gross. Ist er aber zu gross, so verschlechtert sich die Dampfqualität. Deshalb ist es vorteilhafter, im Falle erhöhter Dampferzeugungsleistung ein weiteres Dampfauslassrohr vorzusehen.

Vorzugsweise ist die grundsätzliche Anordnung der Bauelemente in der Erwärmungsvorrichtung derart, dass ein erstes Dampfauslassrohr über ein erstes Magnetventil mit dem (im Regelfall für die Erzeugung von Dampf vorgesehenen) zweiten Durchlauferhitzer verbunden ist, und ein zweites Dampfauslassrohr über ein zweites Magnetventil mit dem (im Regelfall für die Erzeugung von Heisswasser vorgesehenen) ersten Durchlauferhitzer verbunden ist.

Weiterhin ist es vorteilhaft, ein Heisswasserauslassrohr über ein drittes Magnetventil und ein Drosselventil mit dem zweiten Durchlauferhitzer und über ein Umschaltventil und ein Rückschlagventil mit dem ersten Durchlauferhitzer zu verbinden. Mit dem Drosselventil wird erreicht, dass der Druck im zweiten Durchlauferhitzer (der im Regelfall für die Erzeugung von Dampf eingesetzt wird) im Falle der Anforderung eines erhöhten Heisswasserbedarfes, nicht zur Ursache wird, dass Heisswasser in gefährlicher Weise in die Tasse spritzt. Mit dem Rückschlagventil wird erreicht, dass beim Erwärmen des ersten Durchlauferhitzers nicht plötzlich Wasser aus dem Heisswasserauslassrohr tropft, solange das Umschaltventil (das zur Umschaltung von Kaffeeausgabe auf Heisswasserausgabe vorhanden ist) offen steht.

Das Umschaltventil (Umschaltung von Kaffeeausgabe auf Heisswasserausgabe) ist vorzugsweise manuell oder elektrisch steuerbar, weil die entsprechende Auswahl bei den gängigen Kaffeebereitungsmaschinen in der Regel manuell oder über die Bedieneinheit erfolgen kann.

Im Folgenden wird ein Beispiel einer erfindungsgemässen Erwärmungsvorrichtung anhand von Zeichnungen näher erläutert.

In den Zeichnungen zeigt:
- Fig. 1: die prinzipielle Anordnung der Bauelemente einer Erwärmungsvorrichtung.
- Fig. 2: eine schematische Darstellung der Betriebsart "Dampfbezug normal",
- Fig. 3: eine schematische Darstellung der Betriebsart "Dampfbezug erhöht (power steam)",
- Fig. 4: eine schematische Darstellung der Betriebsart "Wasserbezug normal", und
- Fig. 5: eine schematische Darstellung der Betriebsart "Wasserbezug erhöht (power hot water)".
- Fig. 6: die prinzipielle Anordnung der Bauelemente einer Erwärmungsvorrichtung mit zwei Wasserpumpen.

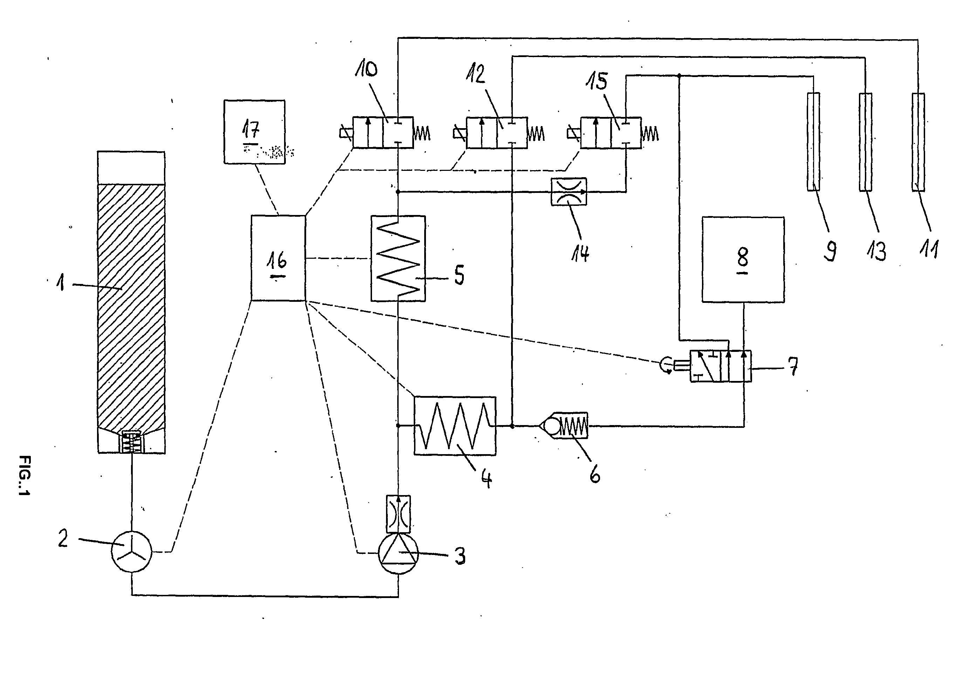

Die Fig. 1 zeigt die prinzipielle Anordnung der Bauelemente einer erfindungsgemässen Erwärmungsvorrichtung für eine Getränkebereitungsmaschine. Aus einem Wassertank 1 fliesst Wasser über eine Durchflussmesseinrichtung 2 zu einer Wasserpumpe 3 mit einem Membranmengenregler. Die Wasserpumpe 3 speist einen ersten Durchlauferhitzer 4 und einen zweiten Durchlauferhitzer 5. Der erste Durchlauferhitzer 4 dient im Normalfall der Erzeugung von Heisswasser, entweder für den Heisswasserbezug oder aber für den Kaffeebezug. Der zweite Durchlauferhitzer 5 dient im Normalfall der Erzeugung von Dampf für den Dampfbezug. Die Durchlauferhitzer 3,4 (allg. auch als Thermoblöcke, Heizblöcke, Heizelemente etc. bezeichnet) dienen jedoch beide zur Erzeugung von Heisswasser oder Dampf und sind entsprechend ausgelegt.

Der Ausgang des ersten Durchlauferhitzers 4 ist über ein Rückschlagventil 6 mit einem Umschaltventil 7 verbunden. Das Umschaltventil 7 dient zur Umschaltung der Betriebsart von Heisswasserausgabe auf Kaffeeausgabe (und umgekehrt). Das Umschaltventil 7 kann manuell oder elektrisch betätigt werden. Der Ausgang des Umschaltventils 7 ist einerseits mit einer Kaffee-Zubereitungsvorrichtung 8 und andererseits mit einem Heisswasserauslaufrohr 9 verbunden. Im Falle eines Heisswasserbezuges erfolgt die Heisswasserausgabe immer über das Heisswasserauslaufrohr 9. Da demgegenüber die Kaffeezubereitung an sich nicht Hauptgegenstand der vorliegenden Erfindung ist, wird deren Funktionsweise als dem Fachmann grundsätzlich bekannt vorausgesetzt und hier nicht weiter erläutert.

Der Ausgang des zweiten Durchlauferhitzers 5 ist über ein erstes Magnetventil 10 mit einem ersten Dampfauslassrohr 11 verbunden. Im Falle eines normalen Dampfbezuges erfolgt die Dampfausgabe immer über das Dampfauslassrohr 11.

Zur Erweiterung der Funktionalität im Sinne der vorliegenden Erfindung ist weiterhin der Ausgang des ersten Durchlauferhitzers 4 über ein zweites Magnetventil 12 mit einem zweiten Dampfauslassrohr 13 verbunden. Zudem ist der Ausgang des zweiten Durchlauferhitzers 5 über ein Drosselventil 14 und ein drittes Magnetventil 15 ebenfalls mit dem Heisswasserauslaufrohr 9 verbunden. Über das zweite und das dritte Magnetventil 12,15 kann im Bedarfsfall von erhöhter Dampfleistung oder erhöhter Heisswasserleistung das gewünschte Produkt an den entsprechenden Auslässen zur Verfügung gestellt werden. Wie ersichtlich, ist im Falle von erhöhter Dampfleistung ein zweites Dampfauslassrohr 13 vorgesehen, damit die Dampfqualität und die Sicherheit gewährleistet bleiben. Im Falle von erhöhter Heisswasserleistung kann hingegen ohne weiteres das bereits vorhandene Heisswasserauslaufrohr 9 verwendet werden, weil hier keine zusätzlichen Probleme entstehen.

Die Steuerung aller Vorgänge der erfindungsgemässen Erwärmungsvorrichtung bzw. der Getränkebereitungsmaschine mit der erfindungsgemässen Erwärmungsvorrichtung erfolgt über eine Steuerungseinrichtung 16 und eine Bedieneinheit 17. Die Steuerungseinrichtung 16 kann dabei in einer dem Fachmann bekannten Weise beispielsweise mit einem Mikroprozessor realisiert werden. Die Bedieneinheit enthält in einer dem Fachmann ebenfalls bekannten Weise Bedien-, Auslöse- und Anzeigeelemente, die einem Benützer der Getränkebereitungsmaschine die Bedienung derselben ermöglichen und erleichtern. Weiterhin beinhaltet die Steuerungseinrichtung natürlich auch Verbindungen zu den zu steuernden Bauelementen, wie die Durchflussmesseinrichtung 2, die Wasserpumpe 3, der erste Durchlauferhitzer 4, der zweite Durchlauferhitzer 5, das Umschaltventil 7 und die Magnetventile 10,12,15. Diese Verbindungen können Steuer- und Überwachungsverbindungen beinhalten, letztere beispielsweise zur Überwachung von Temperaturen.

Wie bereits erwähnt, ermöglicht die erfindungsgemässe Erwärmungsvorrichtung prinzipiell die folgenden vier Betriebsmöglichkeiten bzw. Vorgänge:
1. "Dampfbezug normal",
2. "Dampfbezug erhöht (power steam)",
3. "Wasserbezug normal", und
4. "Wasserbezug erhöht (power hot water)"

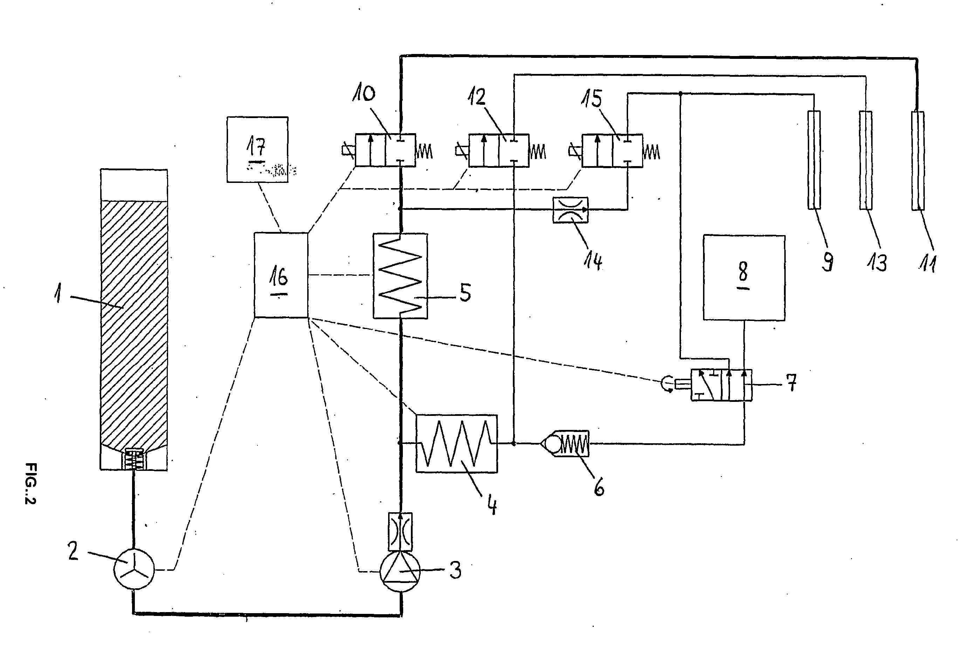

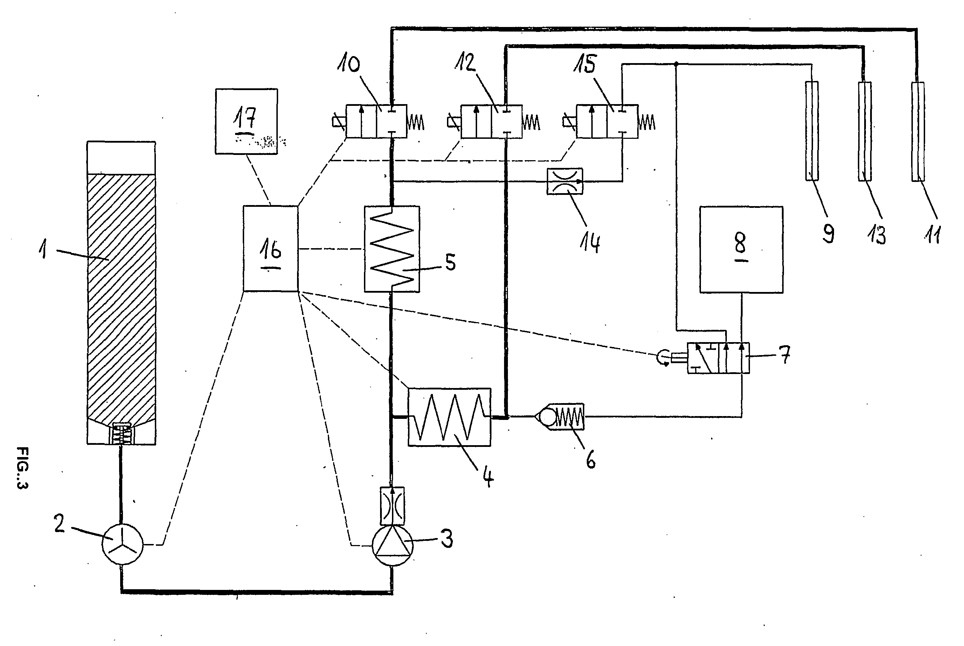

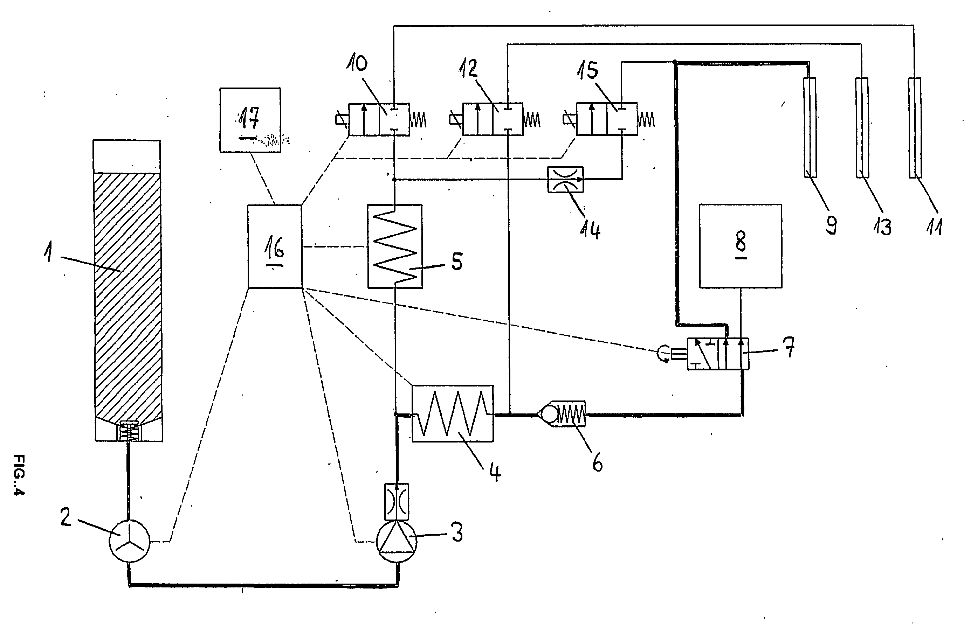

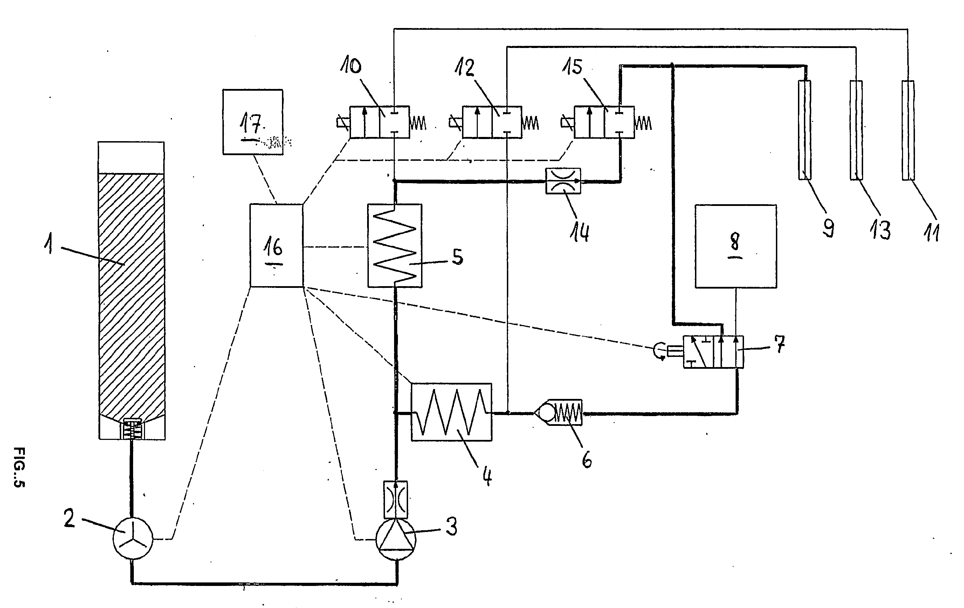

In den Figuren 2 bis 5 sind diese vier Betriebsarten in schematischer Darstellung unter Kennzeichnung der Hauptflusspfade weiter erläutert:
1. "Dampfbezug normal" (vgl. Fig. 2)
   - Zunächst erfolgt die Auslösung eines Dampfbezugs durch Bedieneinheit 17.
   - Die Elektronik der Steuerungseinrichtung 16 hält die Magnetventile 12,15 geschlossen, öffnet das erste Magnetventil 10 und aktiviert die Wasserpumpe 3 mit dem Membranregler.
   - Das Wasser fliesst vom Wassertank 1 durch die Durchflussmesseinrichtung 2 und weiter durch die Wasserpumpe 3 mit dem Membranregler. Im zweiten Durchlauferhitzer 5 wird das Wasser auf Dampf aufgeheizt und der Dampf gelangt über das erste Magnetventil 10 zum ersten Dampfauslassrohr 11.
   - Nach einer erreichten Zeit wird die Wasserpumpe 3 durch die Elektronik der Steuerungseinrichtung 16 abgestellt und die Elektronik der Steuerungseinrichtung 16 schliesst das erste Magnetventil 10 wieder.
2. "Dampfbezug erhöht (power steam)" (vgl. Fig. 3)
   - Zunächst erfolgt die Auslösung eines Dampfbezugs (power steam) durch die Bedieneinheit 17.
   - Die Elektronik der Steuerungseinrichtung 16 hält die Magnetventile 12,15 geschlossen, öffnet das erste Magnetventil 10 und aktiviert die Wasserpumpe 3 mit dem Membranregler.
   - Das Wasser fliesst vom Wassertank 1 durch die Durchflussmesseinrichtung 2 und weiter durch die Wasserpumpe 3 mit dem Membranregler. Im zweiten Durchlauferhitzer 5 wird das Wasser auf Dampf aufgeheizt und der Dampf gelangt über das erste Magnetventil 10 zum ersten Dampfauslassrohr 11.
   - Gleichzeitig wird der erste Durchlauferhitzer 4 auf Dampftemperatur aufgeheizt. Bei erreichter Temperatur öffnet die Elektronik der Steuerungseinrichtung 16 das zweite Magnetventil 12. Dadurch kann der zusätzlich erzeugte Dampf über das zweite Dampfauslassrohr 13 in die aufzuwärmende Flüssigkeit gelangen.
   - Nach einer erreichter Zeit wird die Wasserpumpe 3 durch die Elektronik der Steuerungseinrichtung 16 abgestellt und die Elektronik der Steuerungseinrichtung 16 schliesst die Magnetventile 10,12 wieder.
   - Wird während einer gewissen Zeitdauer kein Dampf mehr benötigt, so geht der erste Durchlauferhitzer 4 wieder in die Standby-Temperatur für Heisswassererzeugung.
   Bemerkung:
   Damit die optimale Dampfqualität und Wasserqualität gewährleistet sind, ist es notwendig , dass die Querschnitte der Auslaufrohre stimmen. Das heisst, dass es für die Dampferzeugung (power steam) notwendig ist, zwei Auslaufrohre zu haben. Deshalb erfolgt in diesem Fall die Dampfausgabe über die beiden Dampfauslassrohre 11 und 13.
3. "Wasserbezug normal" (vgl. Fig. 4)
   - Zunächst erfolgt die Auslösung eines Wasserbezugs entweder durch die Bedieneinheit 17 oder direkt (manuell) durch das Umschaltventil 7.
   - Die Elektronik der Steuerungseinrichtung 16 hält die Magnetventile 10,12,15 geschlossen, öffnet das Umschaltventil 7 (falls es nicht manuell geöffnet wurde) und aktiviert die Wasserpumpe 3 mit dem Membranregler.
   - Das Wasser fliesst nun vom Wassertank 1 durch die Durchflussmesseinrichtung 2 und weiter durch die Wasserpumpe 3 mit dem Membranregler. Im ersten Durchlauferhitzer 4 wird das Wasser aufgeheizt und gelangt über das Rückschlagventil 6 zum Umschaltventil 7. Danach gelangt das Heisswasser über das Heisswasserauslaufrohr 9 in eine Tasse oder dergleichen.
   - Die Durchflussmesseinrichtung 2 meldet der Elektronik der Steuerungseinrichtung 16 die durchfliessende Wassermenge. Bei erreichter Wassermenge wird die Wasserpumpe 3 durch die Elektronik der Steuerungseinrichtung 16 abgestellt.
   - Die Elektronik der Steuerungseinrichtung 16 schliesst das Umschaltventil 7 oder zeigt dem Benutzer an, dass dieses von Hand geschlossen werden muss.
   Bemerkung:
   Der Membranregler bei der Wasserpumpe 3 dient zur Systemberuhigung und fängt die Schläge der Wasserpumpe auf. Das Rückschlagventil 6 wird benötigt, damit beim Erwärmen des ersten Durchlauferhitzers 4 nicht plötzlich Wasser aus dem Heisswasserauslaufrohr 9 tropft, solange das Umschaltventil 7 offen steht.
4. "Wasserbezug erhöht (power hot water)" (vgl. Fig. 5)
   - Zunächst erfolgt die Auslösung des Wasserbezugs (power hot water) durch die Bedieneinheit 17.
   - Die Elektronik der Steuerungseinrichtung 16 hält die Magnetventile 10,12 geschlossen, öffnet das Umschaltventil 7 und das dritte Magnetventil 15 und aktiviert die Wasserpumpe 3 mit dem Membranregler.
   - Das Wasser fliesst nun vom Wassertank 1 durch die Durchflussmesseinrichtung 2 und weiter durch die Wasserpumpe 3 mit dem Membranregler. Im ersten Durchlauferhitzer 4 wird das Wasser aufgeheizt und gelangt über das Rückschlagventil 6 zum Umschaltventil 7. Danach gelangt das Heisswasser über das Heisswasserauslaufrohr 9 in eine Tasse oder dergleichen.
   - Gleichzeitig fliesst Wasser auch durch den zweiten Durchlauferhitzer 5, durch das Drosselventil 14 und das dritte Magnetventil 15 und ebenfalls durch das Heisswasserauslaufrohr 9.
   - Die Durchflussmesseinrichtung 2 meldet der Elektronik der Steuerungseinrichtung 16 die durchfliessende Wassermenge. Bei erreichter Wassermenge wird die Wasserpumpe 3 durch die Elektronik der Steuerungseinrichtung 16 abgestellt.
   - Die Elektronik der Steuerungseinrichtung 16 schliesst das dritte Magnetventil 15 und das Umschaltventil 7, oder zeigt an, dass letzteres von Hand geschlossen werden muss.
   Bemerkungen:
   Das Drosselventil 14 reduziert den Druck, damit der zweite Durchlauferhitzer 5, sofern er vorgängig auf Dampftemperatur gewesen ist, das Heisswasser nicht in die Tasse spritzen lässt.
   Weiterhin besteht die Möglichkeit, auch Heisswasser mit Dampfbeimischung zu erzeugen, sofern dies für bestimmte Anwendungen erwünscht oder sinnvoll ist. Zu diesem Zweck muss lediglich der zweite Durchlauferhitzer 5 mit der dazu notwendigen und gegenüber dem ersten Durchlauferhitzer 4 höheren Leistung betrieben werden. Nach wie vor hat man eine Fluid-Ausgabe mit erhöhter Ausgabeleistung durch Zuschaltung eines weiteren Durchlauferhitzers.

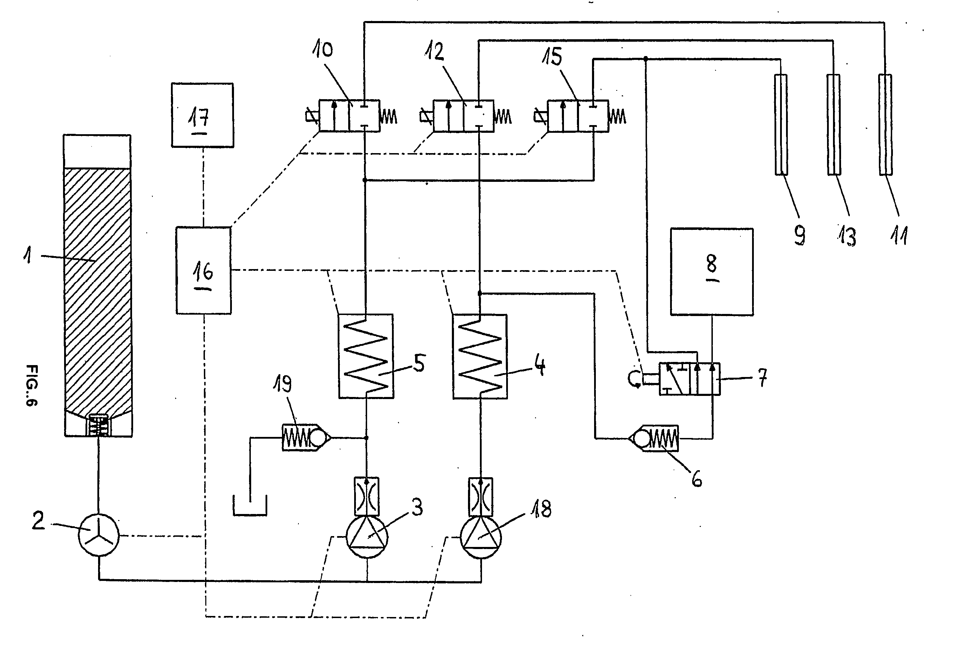

Die Figur 6 zeigt schliesslich noch die prinzipielle Anordnung der Bauelemente einer Erwärmungsvorrichtung mit zwei Wasserpumpen. Zur Verbesserung der Produktequalität kann es notwendig oder erwünscht sein, jedem Durchlauferhitzer kontrolliert die jeweils benötigte Wassermenge zuzuführen, wobei dies hier im Falle des ersten Durchlauferhitzers 4 die Wasserpumpe 18 und im Falle des zweiten Durchlauferhitzers 5 die Wasserpumpe 3 ist.

Auch in diesem Fall erfolgt die Kontrolle der Wassermenge über die Steuerungseinrichtung 16. Die Funktionsweise in den vier Betriebsarten "Dampfbezug normal", "Dampfbezug erhöht", "Wasserbezugs normal" und "Wasserbezug erhöht" ist grundsätzlich gleich wie in den entsprechenden Figuren 2-5 dargestellt und in den zugehörigen Erläuterungen beschrieben.

Weiterhin dürfte es dem Fachmann geläufig sein, dass die gezeigten Funktionsschemata lediglich der Erläuterung des Funktionsprinzipes dienen und dass allgemein bekannte technische Einzelheiten deswegen nicht notwendigerweise alle im Detail gezeigt und beschrieben sind. So zeigt die Figur 6 zusätzlich noch ein Überdruckventil 19, das zu Sicherheitszwecken üblicherweise noch im Bereich des Durchlauferhitzers 5 angeordnet ist.

Bezugsziffernliste:
- 1: Wassertank
- 2: Durchflussmesseinrichtung (Flowmeter)
- 3: Wasserpumpe
- 4: erster Durchlauferhitzer
- 5: zweiter Durchlauferhitzer
- 6: Rückschlagventil
- 7: Umschaltventil
- 8: Kaffee-Zubereitungsvorrichtung
- 9: Heisswasserauslaufrohr
- 10: erstes Magnetventil
- 11: erstes Dampfauslassrohr
- 12: zweites Magnetventil
- 13: zweites Dampfauslassrohr
- 14: Drosselventil
- 15: drittes Magnetventil
- 16: Steuerungseinrichtung
- 17: Bedieneinheit
- 18: zweite Wasserpumpe
- 19: Überdruckventil

## Patentansprüche

1. Erwärmungsvorrichtung für eine Getränkebereitungsmaschine mit mindestens einer Wasserpumpe (3) zur Zuführung von Wasser zu einem ersten Durchlauferhitzer (4) für die Erzeugung von Heisswasser und zu einem zweiten Durchlauferhitzer (5) für die Erzeugung von Dampf, **dadurch gekennzeichnet, dass** der erste Durchlauferhitzer (4) bei Bedarf auf Dampferzeugung umschaltbar und zum zweiten Durchlauferhitzer (5) zuschaltbar ist, und/oder der zweite Durchlauferhitzer (5) bei Bedarf auf Heisswassererzeugung umschaltbar und zum ersten Durchlauferhitzer (4) zuschaltbar ist.

2. Erwärmungsvorrichtung nach Patentanspruch 1, **dadurch gekennzeichnet, dass** der erste und/oder der zweite Durchlauferhitzer (4,5) gleichzeitig oder zeitverzögert zum jeweilig anderen Durchlauferhitzer (5,4) zuschaltbar sind/ist.

3. Erwärmungsvorrichtung nach Patentanspruch 1 oder 2, **dadurch gekennzeichnet, dass** eine Steuerungseinrichtung (16) vorhanden ist, die zur Steuerung der Umschaltung der Durchlauferhitzer (4,5) zur Erzeugung von Heisswasser oder Dampf sowie zur Steuerung der Zuschaltung des ersten Durchlauferhitzers (4) zum zweiten Durchlauferhitzer (5) oder des zweiten Durchlauferhitzers (5) zum ersten Durchlauferhitzer (4) in Abhängigkeit von Eingaben an einer Bedieneinheit (17) und des vorhergehenden Betriebszustandes der Erwärmungsvorrichtung ausgelegt ist.

4. Erwärmungsvorrichtung nach Patentanspruch 3, **dadurch gekennzeichnet, dass** mit den Eingaben an der Bedieneinheit (17) die Vorgänge "Dampfbezug normal", "Dampfbezug erhöht", "Wasserbezug normal" und "Wasserbezug erhöht" wählbar sind.

5. Erwärmungsvorrichtung nach einem der Patentansprüche 1 bis 3, **dadurch gekennzeichnet, dass** zwei Dampfauslassrohre (11,13) vorhanden sind.

6. Erwärmungsvorrichtung nach Patentanspruch 5, **dadurch gekennzeichnet, dass** ein erstes Dampfauslassrohr (11) über ein erstes Magnetventil (10) mit dem zweiten Durchlauferhitzer (5) verbunden ist.

7. Erwärmungsvorrichtung nach Patentanspruch 5, **dadurch gekennzeichnet, dass** ein zweites Dampfauslassrohr (13) über ein zweites Magnetventil (12) mit dem ersten Durchlauferhitzer (4) verbunden ist.

8. Erwärmungsvorrichtung nach einem der Patentansprüche 1 bis 7, **dadurch gekennzeichnet, dass** ein Heisswasserauslaufrohr (9) über ein drittes Magnetventil (15) und ein Drosselventil (14) mit dem zweiten Durchlauferhitzer (5) und über ein Umschaltventil (7) und ein Rückschlagventil (6) mit dem ersten Durchlauferhitzer (4) verbunden ist.

9. Erwärmungsvorrichtung nach Patentanspruch 8, **dadurch gekennzeichnet, dass** das Umschaltventil (7) manuell oder elektrisch steuerbar ist.

10. Erwärmungsvorrichtung nach einem der Patentansprüche 1 bis 9, **dadurch gekennzeichnet, dass** die mindestens eine Wasserpumpe (3) in allen Betriebsarten der Erwärmungsvorrichtung das Wasser aus einem Wassertank (1) fördert.

11. Erwärmungsvorrichtung nach einem der Patentansprüche 1 bis 10, **dadurch gekennzeichnet, dass** jedem Durchlauferhitzer (4,5) je eine Wasserpumpe (18,3) zugeordnet ist.

12. Erwärmungsvorrichtung nach einem der Patentansprüche 1 bis 3, **dadurch gekennzeichnet, dass** der erste Durchlauferhitzer (4) zum zweiten Durchlauferhitzer (5) oder der zweite Durchlauferhitzer (5) zum ersten Durchlauferhitzer (4) in einer Weise zuschaltbar ist, dass im Vergleich zu nur einem Durchlauferhitzer eine grössere Heisswassermenge oder eine grössere Dampfmenge oder eine Heisswassermenge mit Dampfbeimischung ausgebbar ist.

## Claims

1. A heating device for a beverage preparation machine comprising at least one water pump (3) for supplying water to a first continuous-flow heater (4) for generating hot water and to a second continuous-flow heater (5) for generating steam, **characterized in that** the first continuous-flow heater (4) can be switched over to generate steam, if required, and can be connected to the second continuous-flow heater (5) and/or **in that** the second continuous-flow heater (5) can be switched over to generate hot water, if required, and can be connected to the first continuous-flow heater (4).

2. The heating device according to patent claim 1, **characterized in that** the first and/or the second continuous-flow heater (4, 5) can be connected to the respective other continuous-flow heater (5, 4) simultaneously or in a time-delayed manner.

3. The heating device according to patent claim 1 or 2, **characterized in that** a control device (16) is available, which is designed to control the switch-over of the continuous-flow heater (4, 5) to generate hot water or steam as well as to control the connection of the first continuous-flow heater (4) to the second continuous-flow heater (5) or of the second continuous-flow heater (5) to the first continuous-flow heater (4) as a function of inputs at an operating unit (17) and of the preceding operating state of the heating device.

4. The heating device according to patent claim 3, **characterized in that** the processes "steam supply normal", "steam supply increased", "water supply normal" and "water supply increased" can be chosen by means of the inputs at the operating unit (17).

5. The heating device according to one of patent claims 1 to 3, **characterized in that** two steam outlet tubes (11, 13) are available.

6. The heating device according to patent claim 5, **characterized in that** a first steam outlet tube (11) is connected to the second continuous-flow heater (5) via a first magnetic valve (10).

7. The heating device according to patent claim 5, **characterized in that** a second steam outlet tube (13) is connected to the first continuous-flow heater (4) via a second magnetic valve (12).

8. The heating device according to one of claims 1 to 7, **characterized in that** a hot water outlet tube (9) is connected to the second continuous-flow heater (5) via a third magnetic valve (15) and a regulating stop valve (14) and to the first continuous-flow heater (4) via a switch-over valve (7) and a non-return valve (6).

9. The heating device according to patent claim 8, **characterized in that** the switch-over valve (7) can be controlled manually or electrically.

10. The heating device according to one of patent claims 1 to 9, **characterized in that** the at least one water pump (3) conveys the water from a water tank (1) in all operating types of the heating device.

11. The heating device according to one of patent claims 1 to 10, **characterized in that** one water pump (18, 3) is in each case assigned to each continuous-flow heater (4, 5).

12. The heating device according to one of patent claims 1 to 3, **characterized in that** the first continuous-flow heater (4) can be connected to the second continuous-flow heater (5) or **in that** the second continuous-flow heater (5) can be connected to the first continuous-flow heater (4) in such a manner that a larger quantity of hot water or a larger quantity of steam or a quantity of hot water comprising a steam admixture can be output as compared to only one continuous-flow heater.

## Revendications

1. Dispositif de réchauffement pour une machine de préparation de boissons, avec au moins une pompe à eau (3) pour amener de l'eau vers un premier chauffe-eau (4) pour la production d'eau chaude et vers un deuxième chauffe-eau (5) pour la production de vapeur, **caractérisé en ce que** le premier chauffe-eau (4) peut être si nécessaire basculé en mode de production de vapeur et activé ensemble avec le deuxième chauffe-eau (5), et/ou le deuxième chauffe-eau (5) peut être si nécessaire basculé en mode de production d'eau chaude et activé ensemble avec le premier chauffe-eau (4).

2. Dispositif de réchauffement selon la revendication 1, **caractérisé en ce que** le premier et/ou le deuxième chauffe-eau (4, 5) peuvent être activés simultanément ou de façon retardée par rapport à l'autre chauffe-eau (5, 4).

3. Dispositif de réchauffement selon l'une des revendications 1 ou 2, **caractérisé en ce qu'**il est prévu un dispositif de commande (16) conçue pour faire basculer les chauffe-eau (4, 5) en mode de production d'eau chaude ou de vapeur, et pour commander l'activation simultanée du premier chauffe-eau (4) avec le deuxième chauffe-eau (5) ou encore du deuxième chauffe-eau (5) avec le premier chauffe-eau (4), en fonction des données saisies sur une unité de commande (17) et du précédent état de fonctionnement du dispositif de réchauffement.

4. Dispositif de réchauffement selon la revendication 3, **caractérisé en ce que** les saisies sur l'unité de commande (17) permettent de sélectionner les modes « Prélèvement de vapeur normal », « Prélèvement de vapeur augmenté », « Prélèvement d'eau normal » et « Prélèvement d'eau augmenté ».

5. Dispositif de réchauffement selon l'une des revendications 1 à 3, **caractérisé en ce que** deux tuyaux d'évacuation de vapeur (11, 13) sont prévus.

6. Dispositif de réchauffement selon la revendication 5, **caractérisé en ce qu'**un premier tuyau d'évacuation de vapeur (11) est relié au deuxième chauffe-eau (5) par le biais d'une première valve électromagnétique (10).

7. Dispositif de réchauffement selon la revendication 5, **caractérisé en ce qu'**un deuxième tuyau d'évacuation de vapeur (13) est relié au premier chauffe-eau (4) par le biais d'une deuxième valve électromagnétique (12).

8. Dispositif de réchauffement selon l'une des revendications 1 à 7, **caractérisé en ce qu'**un tuyau d'évacuation d'eau chaude (9) est relié au deuxième chauffe-eau (5) par le biais d'une troisième valve électromagnétique (15) et d'une soupape d'étranglement (14), et au premier chauffe-eau (4) par le biais d'une soupape de sélection (7) et d'un clapet anti-retour (6).

9. Dispositif de réchauffement selon la revendication 8, **caractérisé en ce que** la soupape de sélection (7) peut être commandée manuellement ou électriquement.

10. Dispositif de réchauffement selon l'une des revendications 1 à 9, **caractérisé en ce que** l'au moins une pompe à eau (3) extrait l'eau hors du réservoir d'eau (1) dans tous les modes de fonctionnement du dispositif de réchauffement.

11. Dispositif de réchauffement selon l'une des revendications 1 à 10, **caractérisé en ce qu'**une pompe à eau (18, 3) est attribuée à chacun des chauffe-eau (4, 5).

12. Dispositif de réchauffement selon l'une des revendications 1 à 3, **caractérisé en ce que** le premier chauffe-eau (4) peut être activé de telle manière ensemble avec le deuxième chauffe-eau (5) ou encore le deuxième chauffe-eau (5) avec le premier chauffe-eau (4), qu'en comparaison avec un seul chauffe-eau, il est possible de produire une plus grande quantité d'eau chaude ou bien une plus grande quantité de vapeur ou encore une quantité d'eau chaude avec ajout de vapeur.
